# EUROPEAN PATENT SPECIFICATION

(11) **EP 3 590 195 B1**
(45) Date of publication and mention of the grant of the patent: **27.09.2023**
(21) Application number: 17898377.1
(22) Date of filing: 02.03.2017
(51) Int. Cl.: H04L 12/28, H04L 12/10

(54) **SYSTEMS AND METHODS FOR COMMUNICATION BETWEEN DEVICES AND REMOTE SYSTEMS WITH A POWER CORD**
SYSTEME UND VERFAHREN ZUR KOMMUNIKATION ZWISCHEN VORRICHTUNGEN UND REMOTE-SYSTEMEN MIT EINEM STROMKABEL
SYSTÈMES ET PROCÉDÉS DE COMMUNICATION ENTRE DES DISPOSITIFS ET DES SYSTÈMES DISTANTS AVEC UN CORDON D'ALIMENTATION

(43) Date of publication of application: 08.01.2020
(73) Proprietor: iDevices, LLC, Avon, CT 06001 (US)
(72) Inventor: DJAKOVIC, Vladan, San Francisco, CA 94102 (US); MONTEITH, Shawn, Burlington, CT 06013 (US)
(74) Representative: Michalski Hüttermann & Partner Patentanwälte mbB
(86) International application number: PCT/US2017/020431
(87) International publication number: WO 2018/160181

(56) References cited:
- US-A- 2 218 830
- US-A- 3 324 473
- US-A- 3 649 742
- US-A- 5 764 928
- US-A- 5 786 996
- US-A1- 2002 085 023
- US-A1- 2003 067 889
- US-A1- 2009 177 820
- US-A1- 2009 212 628
- US-A1- 2011 156 496
- US-A1- 2013 082 536
- US-A1- 2015 084 433
- US-A1- 2015 084 433
- US-A1- 2016 044 447
- US-A1- 2016 112 828
- US-A1- 2016 209 899
- US-A1- 2016 209 899
- US-A1- 2020 036 550
- US-B1- 6 731 201
- US-B1- 9 596 098

## Description

### FIELD OF THE DISCLOSURE

The present disclosure relates generally to communication between remote systems and electrical devices, for example, appliances. More specifically, the present disclosure relates to a system and method for communication between electrical devices and remote systems via an interface that is located within a power cord of the device.

### BACKGROUND INFORMATION

Contemporary electrical devices have been equipped with sophisticated control systems that govern the operation of the device. Exemplary such devices include machinery and appliances, such as refrigerators, ranges, dishwashers, laundry machines, air conditioners, fans, and microwave ovens. These devices often have control panels, which may have buttons, dials, touch controls (e.g., touchscreen), and other input/output devices, that enable users to set the desired operation of the device and receive information about the operation, status or condition of the device. In the case of an appliance, for example, this can include information such as temperature or remaining time to complete an operation. Inside the device, these panels are connected via various methods, such as via a communications bus, to microcomputers that control the device. Typically, a set of one or more wires connects the control panel to the microcomputer.

Typically, operation of these control panels requires physical presence of the user at the device. In many cases, though, remote operation of the device would be desirable. For example, remote operation of a laundry machine would enable a user to remotely check the remaining time for clothes to wash or dry. Remote operation of an air conditioner would enable a user to start the air conditioner before returning home.

Such remote operation can be effected in various ways. One method involves some form of radio communication to devices that have connectivity to the public internet. This radio communication can include WiFi connection to a home router, Bluetooth^{®} connection to another Bluetooth device that has internet connectivity, or a cellular or other connection. This radio communication requires use of a radio transceiver to transmit commands between a user and an appliance. The device may include within it a radio transceiver for this purpose.

US 2016/209899 A1 describes power switching devices delivering power to at least one powered device and may commanding, controlling and/or monitoring the powered device(s).

US 2015/084433 A1 describes a standalone power cord to control an electrical appliance for home automation includes a first electrical connector at one end of the standalone power cord.

### SUMMARY OF THE INVENTION

The inventors have concluded that current implementation of radio communication to and from devices has limitations and problems. First, locating the transceiver within the device requires extra space or internal redesign of the device. This redesign requirement renders retrofitting of device to include a radio transceiver prohibitively expensive. Second, the device itself can interfere with the operation of the transceiver. For example, the device itself can generate radio signals that cause interference; metal or other panels, housings and components of the device can block radio waves; and the device can generate environmental influences, such as high or low temperature, vibration, etc., that can affect the transceiver's performance. Problems like these have limited deployment of internet-connected devices.

In view of the above, the inventors have determined that there is a need for systems and methods for connecting electric devices, such as appliances, for remote control with reduced redesign requirements.

The invention is defined by the features of the independent claims.

The present disclosure relates to systems for remote communication with devices, such as appliances, using a module connected to the device's power cord. In one embodiment, a system comprises a power cord equipped with a module having a microprocessor, a transceiver, and an interface with one or more control wires. The module may be placed within a plug enclosure that is connectable to a power source such as an electrical outlet or inline along the power cord. The transceiver is configured to transmit information or commands between a remote device and a microprocessor within the module. The microprocessor translates information and commands from the communications protocol of the remote device to the communications protocol of the device, and vice versa. Control wires extend from the module along or within the power cord, and are operatively connected to the device's control system, e.g., microcomputer. The microprocessor is configured to transmit control signals and/or receive information or feedback from the device's microcomputer using the communications protocol of the device.

The present disclosure also relates to methods for remotely communicating with an electric device, such as an appliance, using a module connected to the device's power cord. In one embodiment, a user transmits commands wirelessly from a remote device to a device via a module attached to a power cord. The module may be placed within a plug or inline along a power cord, and it has a microprocessor, a transceiver, and an interface with one or more control wires. The control wires extend from the module along or within the power cord, and transmit the command(s) the module received from the remote device to the device using the device's communications protocol. In embodiments where the device generates information or feedback, e.g., temperature, time elapsed, or time remaining, and transmits that to the module via the control wires, the module may transmit that information back to the user's remote device via the module's wireless connection, so that the user may monitor the device using the user's remote device.

Other objects and advantages of the present invention will become apparent in view of the following detailed description of embodiments and the accompanying drawings.

### BRIEF DESCRIPTION OF THE DRAWINGS

So that those having ordinary skill in the art to which the present disclosure pertains will more readily understand how to make and use the invention, reference may be had to the drawings wherein:
FIG. 1 illustrates a device and power cord.
FIG 2A illustrates a power plug and power cord containing a radio module within the plug.
FIG. 2B illustrates a module contained with the power plug illustrated in FIG. 2A.
FIG. 3A illustrates a power plug and power cord containing a radio module within the power cord.
FIG. 3B illustrates a module contained with the power plug illustrated in FIG. 3A.
FIG. 4 is a schematic diagram of internal components of the module and power cord illustrated in FIGS. 3 A and 3B.
FIG. 5 is a schematic illustration of a system wherein a device and a remote device communicate via a power cord.
FIG. 6 is a schematic diagram of a control loop between a remote device, a radio module, and a device.

### DETAILED DESCRIPTION

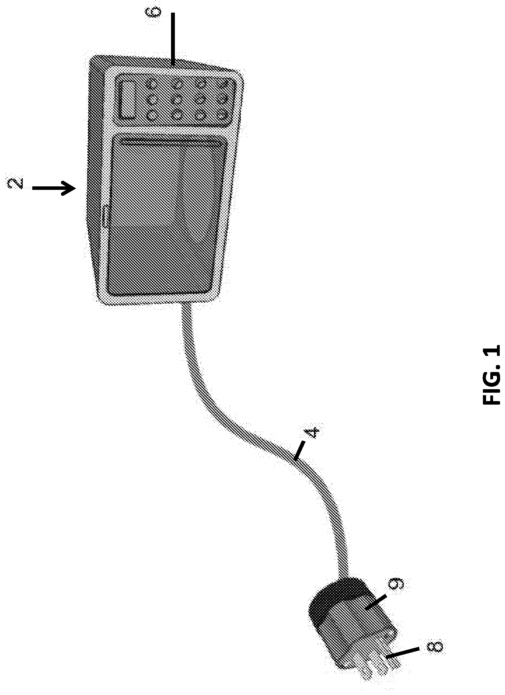

Referring to FIG. 1, a device 2, which is illustrated as a microwave oven, has a control panel 6 for manual input of controls and/or operation of the device by a user. Although, the device shown is a microwave oven, the present invention can be used in connection with any device currently known or that will become known in the future that has an electronic control system, including machinery, a refrigerator, freezer, range, induction stove, oven, fan, computer, television, air conditioner, humidifier, washing machine, dryer, dishwasher, lighting device, lamp, coffee machine, or food processor. Further, though a control panel 6 is shown, the device 2 may have any other control system for actuation by a user.

The control panel may have buttons, knobs, dials, touchscreens, displays, lights, indicators, and/or other input/output devices that enable users to set the desired operations and receive information about the operation, status or condition of the device 2. This may include, for example, temperature or remaining time to complete an operation. The control panel 6 or other control system is connected via a communications bus to a microcomputer that controls the device 2.

The device 2 receives electrical power via power cord 4 connected at one end to the device 2. At an opposite end of the power cord, the power cord has a plug assembly 9 with a plug terminal or prong arrangement 8 that protrudes from plug assembly 9 and is adapted to plug into or electrically connect with a power source, e.g., an electrical outlet, in a known manner. It should be understood by those of ordinary skill in the art, however, that an electrical connection other than terminals or prongs may be used to connect to a power source. Any suitable connection to the power source may be utilized.

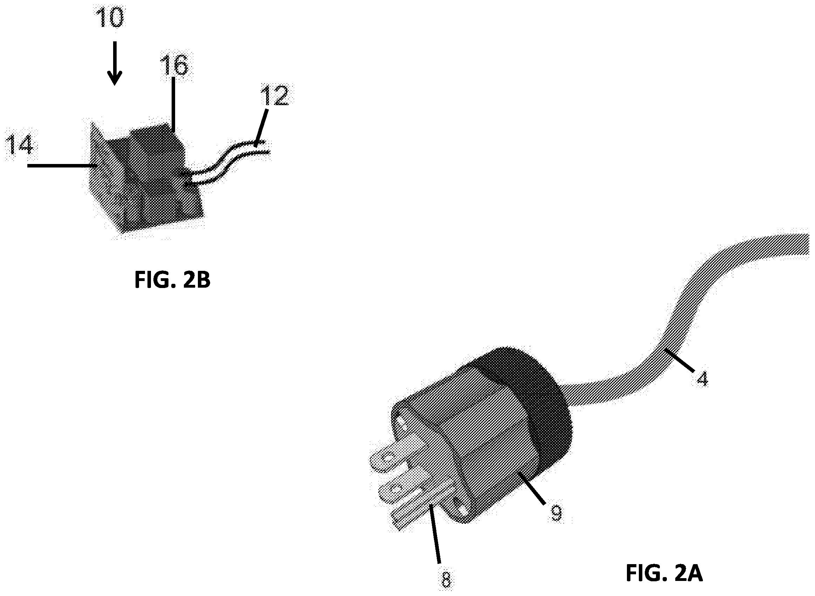

In the embodiment shown in FIGS. 2A and 2B, a control module 10 is embedded or contained within the plug assembly 9. Components of module 10 include a transceiver 14, a microprocessor 16, and a power converter (not shown in FIG. 2B). Control wires 12 extend from module 10 to the device's control system through the power cord 4. Accordingly, in such embodiments, both the electrical power lines to device 2 and the control wires 12 are compactly contained within the power cord 4. To a user, the power cord 4 may appear no different from a typical power cord. In addition, as may be recognized by one of ordinary skill in the pertinent art based on the teachings herein, any of numerous other internal components currently known, or that later become known, necessary for the integration and proper functioning of the aforementioned internal components may be included within the module.

Transceiver 14 may comprise a radio transmitter and an antenna, or any other suitable device for transmitting and receiving radio or wireless signals as should be appreciated by those of ordinary skill in the art. The antenna may consist of a PCB antenna, a chip antenna, an integrated antenna in the radio IC/module, or any other antenna configured for wireless transmission known to those of skill in the art or later become known. In addition, the transceiver 14 may communicate wirelessly with the remote device using any method of wireless communication that is currently known or may later become known, including but not limited to R-F communication, infrared communication, Bluetooth communication, Bluetooth low energy (BLE), cellular, and Wi-Fi communication.

Microprocessor 16 may include a software storage device and a CPU. The storage device may comprise any suitable, computer-readable storage medium such as disk, non-volatile memory, etc., as will be understood by those of ordinary skill in the art (e.g., read-only memory (ROM), erasable programmable ROM (EPROM), electrically-erasable programmable ROM (EEPROM), flash memory, field-programmable gate array (FPGA), etc.). Software embedded on the storage device may be embodied as computer-readable program code and executed by the CPU using any suitable high or low level computing language as would be understood by those of ordinary skill in the art, such as, but not limited to, Python, Java, C, C++, C#, .NET, MATLAB, etc. The CPU may include any suitable single- or multiple-core microprocessor 16 of any suitable architecture that is capable of implementing and running a control protocol for the device 2 (e.g., Intel processor). That is, the microprocessor 16 is configured to generate and send signals to the device 2, in accordance with software contained in the computer-readable storage medium of the module 10, so that the device 2 can receive signals from the module 10 and implement to operate the device 2.

A power converter (not shown in FIG. 2B) is electrically connected to electrical power wires (not shown in FIG. 2B) within the power cord that receive electrical power from an electric power source, e.g., electrical prongs 8 that are electrically connected to the power source, such as an outlet. The power converter converts voltage from the power line into a voltage that is suitable for use by module 10. This includes the power used to operate the components of the module 10 itself, but also to generate signals for transmission to the device 2 along the control lines 12, and radio/wireless signals for communication with the user's remote device.

The microprocessor communicates with the microcomputer of the device 2 via the control wires 12. In the embodiment of FIGS. 2A and 2B, the plurality of control wires 12 are embedded within the power cord 4 alongside the power lines (not shown in FIG. 2A) that provide electrical power to the device. In such embodiments the physical appearance or envelope of the power cord is not affected, as the system is fully embedded inside the device's power cord. In other embodiments, the control wires 12 operatively connect to the device 2 separately from the power cord 4.

In the embodiments shown, two control wires 12 are depicted. However, as should be realized by one of skill in the art, the system may contain any suitable number of wires, e.g., one wire for bi-directional communication between the module and the device, or additional wires, such as four, six, eight, or more, according to the requirements of the communications bus of the device. For example, a USB connection typically comprises four wires. When the device's control panel communicates with its microcomputer via a USB connection with four wires, the plurality of control wires 12 may likewise comprise a USB connection with four wires. As one of ordinary skill in the art may appreciate, the communication link between the module 10 and device 2 may be of any suitable configuration, e.g., USB, serial, parallel, optical (e.g., fiber optic), etc.

The control wires 12 are operatively connected to the device's communications bus, either directly or indirectly. The communications bus then transmits commands and information between the control wires and the device's microcomputer (e.g., from/to the module 10). In this manner, the device 2 responds to signals from control wires 12 (which are from the module 10) essentially the same way as it would to signals from the device's control panel 6 manually entered from a user.

An advantage of the invention over previously-known devices is that, due to the relatively easy installation and connection of the control wires to the device, i.e., they operatively connect to/through the device's communications bus, only limited modification to the device need be made. For example, the device does not have to be configured or re-configured to incorporate a wireless device. Moreover, the disadvantages discussed above with integrated wireless control devices are effectively avoided. In addition, the cost of providing the power cord is much less than integrating the wireless unit into the device itself. On this point, the power cords can be standardized for use with many different types of device, providing high cost efficiency. This is in contrast to the previously-known devices, where each device would need to be configured separately.

A further advantage of this embodiment is that the device can operate using the same control protocol with which it was initially programmed. As discussed above, the microprocessor 16 may be programmed to communicate with the device's microcomputer using the communications protocol of the device. The microprocessor 16 may be additionally programmed to translate information from the communications protocol used by the device to the communications protocol used by a remote device. This permits, for example, not only transmitting commands to the device, but receiving information, feedback or status information from the appliance and communicating that to the remote device. It should be understood that, depending on the degree of variation among devices, it may be necessary to program the microprocessor 16 with a unique program for each device model, or each category of device, that is to be remotely connected or accessed using the module. However, as the same hardware, i.e., the power cord, may be used for multiple devices, this involves relatively low cost software programing, not hardware modification of the device itself.

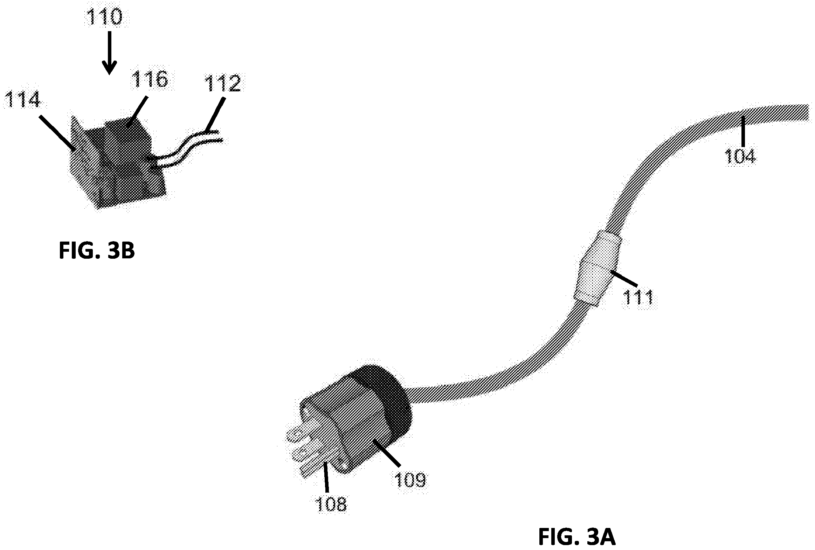

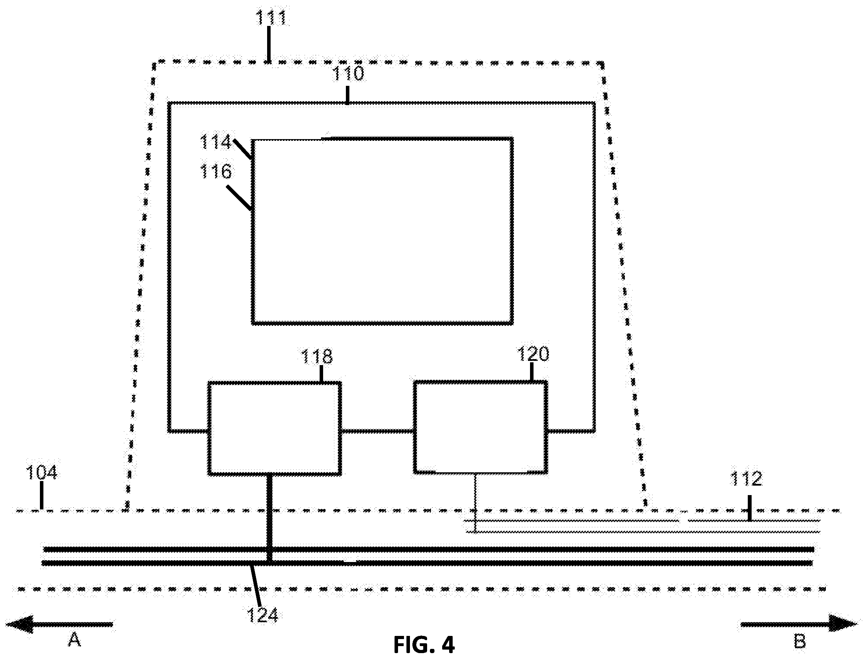

In another embodiment shown in FIGS. 3A, 3B, and 4, a module 110, which may be structurally and/or functionally similar to module 10, is placed inline along a portion of power cord 4. Module 110 may comprise the same internal components as the module 10 of the embodiment of FIGS. 2A, and 2B, including power wires 112, transceiver 114, microprocessor 116, and power converter 118 (not shown in FIG. 3B). As noted above, the primary difference between the embodiment of FIGS. 2A and 2B and the embodiment of FIGS. 3A, 3B, and 4 is the location of the module 110 being inline along the power cord 104, rather than embedded within the plug assembly 109. Further to this difference, module 110 is encased in sleeve or housing 111 that extends around the portion of power cord 104 to which module 110 is operatively connected. The inline module 110 is shown in FIG. 3A located near the plug assembly of the power cord. This placement provides distance between the transceiver module 110 from any radio and environmental interferences from the device itself. However, the module 110 may be placed at any suitable location along the power cord 104.

FIG. 4 is a schematic diagram illustrating internal components of module 110, according to one embodiment. Power cord 104 extends in direction "A" toward power plug assembly 109 (not shown in FIG. 4), to which it is electrically connected, and contains power wires 124. Power converter 118 is electrically connected to power wires 124 and converts the line voltage into voltage suitable for operation of the transceiver 114 and microprocessor 116, as discussed above. The microprocessor is operatively connected to wired control interface 120, which is in turn operatively attached to control wires 112. Sleeve or housing 111 extends around module 110. In the embodiment depicted in FIG. 4, the control wires 112 are encased within power cord 104 alongside power wires 124, and the power cord 104 extends in direction "B" from module 110 toward device 2 (not shown in FIG. 4). In an alternative embodiment, the control wires 112 may extend to the device in a separate cord. As would be understood by one of skill in the art, the schematic relationship of the elements of the module 110 shown in Fig. 4 may be applicable in all pertinent respects to the embodiment depicted in FIGS. 2A and 2B, except that in that embodiment the plug assembly 9 encases the module 10 instead of a sleeve or housing 111 on the power cord 104.

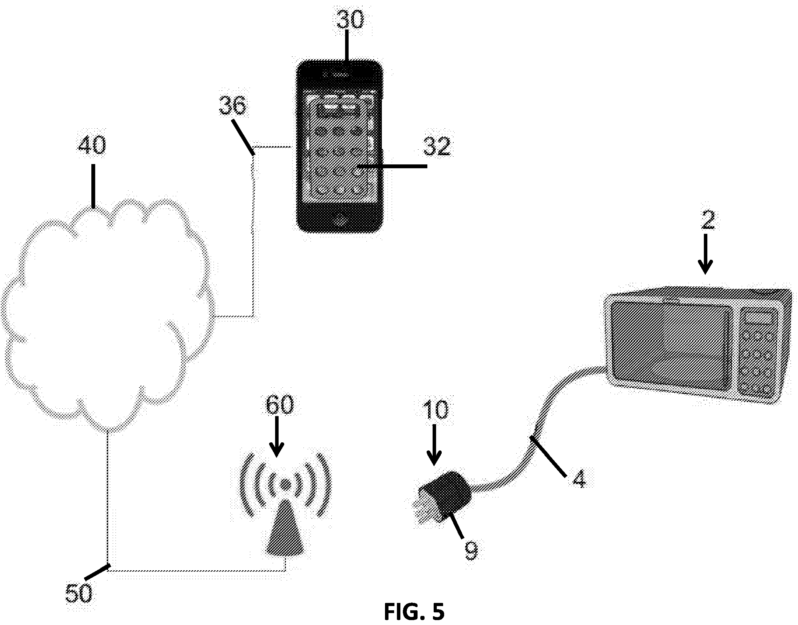

FIG. 5 schematically illustrates a system for communication between a device 2 and a remote device 30. In this illustrated embodiment, the remote device 30 includes a computer program, e.g., an application, for interface between the user and the system to communicate with the device 2. An exemplary application on the remote device 30 may display, for example, a graphical user interface 32 that simulates the device control panel. The remote device 30 used to control the device 2 may be any suitable computerized device, e.g., a smart phone, a tablet, a mobile computer, a desktop computer, etc. The remote device 30 is operatively connected to the device 2 through a communication path. In the illustrated embodiment, this path includes an internet service provider (represented by communication lines 36), public Internet (represented by cloud 40), an internet service provider (represented by communication lines 50), which may be the same or different than internet service provider 36, an access point for the module 10 of the power cord 4 (represented by radio beacon 60), the radio transceiver module 10 which, in this embodiment, is located inside the plug assembly 9, and additional control wires 12 inside the cable 4. The user can now access all or some of the functions of the device control panel 6 from the remote location.

It should be understood that the communication between the remote device 30 and the cloud 40, and between the cloud 40 and the access point 60 may occur over any known or later known communication system. This includes, but is not limited to, wired systems, wireless systems, cellular systems, Ethernet systems, etc. It should also be understood that, though in the embodiment of FIG. 5 the user interface 32 has a similar form as the control panel 6 on the device, the interface 32 may take any suitable form that allows a user to input control instructions into the interface 32 to control the device 2, and/or perceive information transmitted from the device 2 to the remote device 30. It should also be understood that, though the interface 32 in the embodiment shown in FIG. 5 is in the form of a graphical/visual interface, the interface 32 may take any suitable form. For example, in alternative or additionally to graphical/visual elements, the interface 32 may include audio and/or tactile (e.g., vibration, movement, etc.) elements. The interface 32 may also include motion or gesturing detection, such that, for example, the interface 32 may recognize gestures or movement of the user representing control instructions of the user. As one such example, if the control panel 6 contained a dial for controlling operation of the device 2, the interface 32 could be programmed to recognize a motion of the user representing the virtual turning of a dial. Those of ordinary skill in the art should understand how to create or program the interface 32 to achieve the desired control and display features of the interface 32.

An exemplary method of using the system illustrated in Figure 5 is as follows. For example, to transfer a command from the remote device 30 to a device 2, which in the illustrated embodiment is an appliance, e.g., a microwave oven, a user inputs a command onto the remote device 30 via the interface 32. This command may then be transferred to the transceiver 16. In the illustrated embodiment, this is done via a series of intermediate way points, including the cloud 40, one or more internet service providers 36, 50, and the access point 60. The access point 60 then transmits the command to the transceiver 16 within module 10, for example, by radio communication. This command is further transmitted along control wires 12 to device 2 by the module 10 in accordance with its programming. Information may be transferred back from the device 2 to the remote interface 32 along the same communications path, in the opposite direction.

It should be noted, though, that the communication path between the device 2 and the remote device 30 may be any type of known or later known communication system or combination of systems. For example, the remote device 30 and the module 10 may communicate directly with each other. One protocol to accomplish this includes Bluetooth or BLE communication between the two, in embodiments where the module 10 and the remote device 30 are so equipped. In other embodiments, the remote device 30 and the module 10 may communicate through a network at the location of the device 2 and the remote device 30, for example, a Wi-Fi network. In such embodiments, the public internet need not be utilized, though in other embodiments the cloud 40 may be used in the communication path even if the device 2 and the remote device 30 are located within the same local network. Such embodiments permit, for example, remote (cloud) storage of the commands and information transmitted between the device 2 and the remote device 30, which may then, in various embodiments, be later retrieved, e.g., by the remote device 30 or another computing device.

It should also be understood that while the embodiment shown in FIG. 5 depicts one device 2 and one remote device 30, the system may include multiple devices and multiple remote devices that may communicate with each other. As one example, the remote device 30 may control and receive information about multiple devices, which may be the same or different from each other. As another example, one or more devices may be controlled by and/or send information to multiple remote devices.

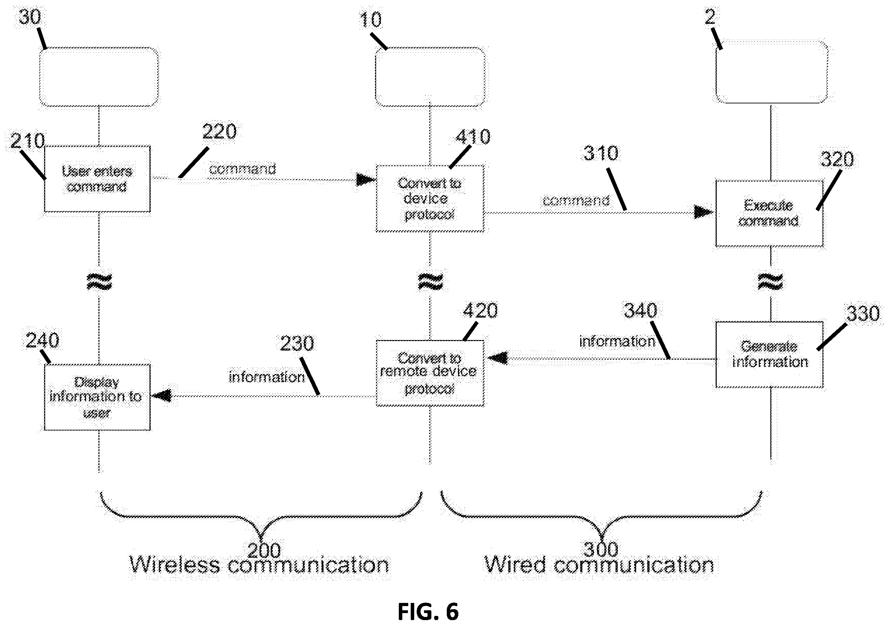

FIG. 6 schematically depicts a control/feedback loop between a remote device 30, a module 10, and a device 2. Module 10 mediates between wireless communication position 200 of the loop including remote device 30 and the wired communication position 300 of the loop including device 2. In one embodiment of a control loop, a user may enter at step 210 a command on a remote device 30. The remote device 30 transmits at step 220 the command directly or indirectly to the module 10, using a suitable form of wireless communication, as discussed above. The microprocessor of module 10 translates, if necessary, at step 410 the command received from remote device 30 into a communications protocol understood by device 2. Module 10 then transmits at step 310 the command via wired communication to device 2. Device 2 at step 320 executes the command. Device 2 may at step 330 generate information, e.g., following execution of the command. Alternatively, the device 2 may generate and transmit information without relation to a command signal received from the module 10. Device 2 transmits this information at step 340 using wired communication to module 10. The microprocessor of module 10 if necessary translates at step 420 this information to a protocol understood by the remote device 30. Module 10 then transmits at step 230 the information using wireless communication to the remote device 30. The remote device 30 then displays at step 240 the information to a user. The user may then respond to the information by transmitting another command to the device. As can be appreciated, while FIG. 6 depicts steps 210, 220, 410, 310, 320, 330, 340, 420, 230, and 240 as occurring in a control or feedback loop, each step or series of steps can be performed without necessarily being preceded or followed by performance of the other steps. For example, the device may transmit information to the user without being prompted by a user command.

While the above describes certain embodiments, those skilled in the art should understand that the foregoing description is not intended to limit the scope of the invention. It should also be understood that the embodiments of the present disclosure described herein are merely exemplary.

## Claims

1. A system comprising
a device (2);
a power cord (4) having a power line therein configured to provide the device (2) with electrical power from an electrical source;
a module (10) electrically connected to the power line, the module (10) having a transceiver (14) for wireless communicating with a remote device (30), a microprocessor (16), and a power converter configured for converting power in the power line for use by the module (10); and
wherein the device (2) further comprises a microcomputer separated from the microprocessor (16) and the microcomputer configured to control the device (2), the device (2) further comprising a control panel (6) integrated therewith, and a communications bus configured to modulate between the control panel (6) and the microcomputer;
the power cord (4) extending between the module (10) and the device (2), the power cord (4) adapted to include at least one control wire (12) embedded in the power cord (4) extending from the module (10) to the device (2) and configured to transmit control signals between the module (10) and the device (2) to control the device (2); and wherein
the at least one control wire (12) is connected to the communications bus at substantially the same location at which the control panel (6) is connected to the communication bus.

2. A system as defined in claim 1, wherein the microcomputer is configured to transmit and receive communications according to a device communications protocol, and the module (10) communicates with the microcomputer using the device communications protocol.

3. A system as defined in claim 2, wherein the microprocessor (16) further comprises a software storage device, and computer readable instructions enabling the module (10) to communicate with the device (2) using the device communications protocol are electronically stored on the software storage device.

4. A system as defined in claim 2, wherein the remote device (30) is configured to transmit and receive communications using a remote device communications protocol that is different from the device communications protocol, and the microprocessor (16) translates information between the remote device communications protocol and the device communications protocol.

5. A system as defined in claim 1, wherein a plug assembly (9) is attached to an end of the power cord (4), and the module (10) is embedded with the plug assembly (9).

6. A system as defined in claim 1, wherein a plug assembly (9) is attached to an end of the power cord (4), and the module (10) is operatively connected to a portion of the power cord (4) located between the plug assembly (9) and the device (2).

7. A system as defined in claim 6, wherein the module (10) is enclosed by a housing or sleeve (111).

8. A system as defined in claim 1, wherein the power cord (4) defines a first end that is proximate to the device (2) and a second end that is distal to the device (2), and the module (10) is located at or near the distal end of the power cord (4).

9. A system as defined in claim 1, wherein the transceiver (14) communicates with the remote device (30) using at least one of R-F, infrared, Bluetooth, Bluetooth low energy, or Wi-Fi communication protocol.

10. A method comprising
wirelessly transmitting information between a remote device (30) and a module (10) located on and operatively attached to a power cord (4) of a device (2), the module (10) having a transceiver (14), microprocessor (16), and power converter, the device (2) having a microcomputer separate from the microprocessor (16) and configured to control the device (2), the device (2) further having a control panel (6) and a communication bus modulating between the control panel (6) and the microcomputer; and
transmitting the information to control the device (2) via wired communication along at least one control wire (12) of the power cord (4), the at least one control wire (12) embedded in the power cord (4) extending from the module (10) to the device (2), the at least one control wire (12) connected to the communication bus at substantially the same location at which the control panel (6) is connected to the communication bus.

11. A method as defined in claim 10, wherein the information is a command signal configured to control operation of the device (2).

12. A method as defined in claim 10, further comprising, after the wirelessly transmitting step and before the transmitting step, translating the information from a communications protocol used by the remote device (30) to a communications protocol used by the device (2).

13. A method as defined in claim 10, further comprising receiving information or feedback from the appliance, the receiving step comprising at least one of:
(i) receiving information or feedback from the device (2) to the module (10) via wired communication along the at least one control wire (12), and
(ii) receiving information or feedback from the module (10) to the remote device (30) via wireless communication.

## Patentansprüche

1. System, mit:
einer Vorrichtung (2);
einem Stromkabel (4) mit einer darin angeordneten Stromleitung, das dafür konfiguriert ist, die Vorrichtung (2) mit elektrischem Strom von einer Stromquelle zu versorgen;
einem Modul (10), das elektrisch mit der Stromleitung verbunden ist, wobei das Modul (10) einen Transceiver (14) zur drahtlosen Kommunikation mit einer abgesetzten Vorrichtung (30), einen Mikroprozessor (16) und einen Stromwandler aufweist, der dafür konfiguriert ist, Strom in der Stromleitung zur Verwendung durch das Modul (10) umzuwandeln, und
wobei die Vorrichtung (2) ferner einen vom Mikroprozessor (16) getrennten Mikrocomputer aufweist und der Mikrocomputer dafür konfiguriert ist, die Vorrichtung (2) zu steuern, wobei die Vorrichtung (2) ferner ein darin integriertes Bedienfeld (6) und einen Kommunikationsbus aufweist, der dafür konfiguriert ist, zwischen dem Bedienfeld (6) und dem Mikrocomputer zu modulieren,
das Stromkabel (4) sich zwischen dem Modul (10) und der Vorrichtung (2) erstreckt, wobei das Stromkabel (4) derart eingerichtet ist, dass es mindestens einen Steuerdraht (12) aufweist, der in das Stromkabel (4) eingebettet ist und sich vom Modul (10) zur Vorrichtung (2) erstreckt und dafür konfiguriert ist, Steuersignale zwischen dem Modul (10) und der Vorrichtung (2) zu übertragen, um die Vorrichtung (2) zu steuern, und
wobei der mindestens eine Steuerdraht (12) mit dem Kommunikationsbus im Wesentlichen an der gleichen Stelle verbunden ist, an der das Bedienfeld (6) mit dem Kommunikationsbus verbunden ist.

2. System nach Anspruch 1, wobei der Mikrocomputer dafür konfiguriert ist, Kommunikationen gemäß einem Vorrichtungskommunikationsprotokoll zu übertragen und zu empfangen, und das Modul (10) unter Verwendung des Vorrichtungskommunikationsprotokolls mit dem Mikrocomputer kommuniziert.

3. System nach Anspruch 2, wobei der Mikroprozessor (16) ferner eine Software-Speichereinrichtung aufweist und computerlesbare Anweisungen, die das Modul (10) in die Lage versetzen, unter Verwendung des Vorrichtungskommunikationsprotokolls mit der Vorrichtung (2) zu kommunizieren, auf der Software-Speichereinrichtung elektronisch gespeichert sind.

4. System nach Anspruch 2, wobei die abgesetzte Vorrichtung (30) dafür konfiguriert ist, unter Verwendung eines vom Vorrichtungskommunikationsprotokoll verschiedenen Kommunikationsprotokolls für eine abgesetzte Vorrichtung Kommunikationen zu übertragen und zu empfangen, und wobei der Mikroprozessor (16) Information zwischen dem Kommunikationsprotokoll für eine abgesetzte Vorrichtung und dem Vorrichtungskommunikationsprotokoll übersetzt.

5. System nach Anspruch 1, wobei eine Steckeranordnung (9) an einem Ende des Stromkabels (4) befestigt ist und das Modul (10) in der Steckeranordnung (9) eingebettet ist.

6. System nach Anspruch 1, wobei eine Steckeranordnung (9) an einem Ende des Stromkabels (4) befestigt ist und das Modul (10) betrieblich mit einem zwischen der Steckeranordnung (9) und der Vorrichtung (2) angeordneten Abschnitt des Stromkabels (4) verbunden ist.

7. System nach Anspruch 6, wobei das Modul (10) von einem Gehäuse oder einer Hülse (111) umschlossen ist.

8. System nach Anspruch 1, wobei das Stromkabel (4) ein erstes Ende in der Nähe der Vorrichtung (2) und ein zweites Ende distal von der Vorrichtung (2) aufweist und das Modul (10) am oder in der Nähe des distalen Endes des Stromkabels (4) angeordnet ist.

9. System nach Anspruch 1, wobei der Transceiver (14) unter Verwendung mindestens eines Kommunikationsprotokolls unter einem R-F-, einem Infrarot-, einem Bluetooth-, einem Bluetooth-Low-Energy- oder einem WiFi-Kommunikationsprotokoll mit der abgesetzten Vorrichtung (30) kommuniziert.

10. Verfahren, mit den Schritten:
drahtloses Übertragen von Information zwischen einer abgesetzten Vorrichtung (30) und einem Modul (10), das auf einem Stromkabel (4) der Vorrichtung (2) angeordnet und betrieblich daran befestigt ist, wobei das Modul (10) einen Transceiver (14), einen Mikroprozessor (16) und einen Stromwandler aufweist, wobei die Vorrichtung (2) einen vom Mikroprozessor (16) getrennten Mikrocomputer aufweist, der dafür konfiguriert ist, die Vorrichtung (2) zu steuern, wobei die Vorrichtung (2) ferner ein Bedienfeld (6) und einen Kommunikationsbus aufweist, der zwischen dem Bedienfeld (6) und dem Mikrocomputer moduliert; und
Übertragen der Information zum Steuern der Vorrichtung (2) über eine drahtgebundene Kommunikation entlang mindestens eines Steuerdrahtes (12) des Stromkabels (4), wobei der mindestens eine Steuerdraht (12) in das Stromkabel (4) eingebettet ist und sich vom Modul (10) zur Vorrichtung (2) erstreckt, wobei der mindestens eine Steuerdraht (12) mit dem Kommunikationsbus im Wesentlichen an der gleichen Stelle verbunden ist, an der das Bedienfeld (6) mit dem Kommunikationsbus verbunden ist.

11. Verfahren nach Anspruch 10, wobei die Information ein Befehlssignal ist, das dafür konfiguriert ist, einen Betrieb der Vorrichtung (2) zu steuern.

12. Verfahren nach Anspruch 10, ferner mit dem Übersetzen der Information von einem durch die abgesetzte Vorrichtung (30) verwendeten Kommunikationsprotokoll in ein durch die Vorrichtung (2) verwendetes Kommunikationsprotokoll nach dem drahtlosen Übertragungsschritt und vor dem Übertragungsschritt.

13. Verfahren nach Anspruch 10, ferner mit dem Empfangen von Information oder einer Rückmeldung vom Gerät, wobei der Empfangsschritt mindestens einen der folgenden Schritte aufweist:
(i) Empfangen von Information oder einer Rückmeldung von der Vorrichtung (2) am Modul (10) über eine drahtgebundene Kommunikation entlang des mindestens einen Steuerdrahtes (12); und
(ii) Empfangen von Information oder einer Rückmeldung vom Modul (10) an der abgesetzten Vorrichtung (30) über drahtlose Kommunikation.

## Revendications

1. Système comprenant
un dispositif (2) ;
un câble d'alimentation (4) ayant une ligne électrique à l'intérieur conçue pour fournir au dispositif (2) de l'énergie électrique provenant d'une source d'électricité ;
un module (10) connecté électriquement à la ligne électrique, le module (10) ayant un émetteur-récepteur (14) pour communiquer sans fil avec un dispositif distant (30), un microprocesseur (16) et un convertisseur d'énergie conçu pour convertir l'énergie dans la ligne électrique pour une utilisation par le module (10) ; et
dans lequel le dispositif (2) comprend en outre un micro-ordinateur séparé du microprocesseur (16) et le micro-ordinateur étant conçu pour commander le dispositif (2), le dispositif (2) comprenant en outre un panneau de commande (6) intégré à l'intérieur, et un bus de communication conçu pour assurer une modulation entre le panneau de commande (6) et le micro-ordinateur ;
le câble d'alimentation (4) s'étendant entre le module (10) et le dispositif (2), le câble d'alimentation (4) étant adapté pour comporter au moins un fil de commande (12) incorporé dans le câble d'alimentation (4) s'étendant du module (10) vers le dispositif (2) et étant conçu pour transmettre des signaux de commande entre le module (10) et le dispositif (2) pour commander le dispositif (2) ;et dans lequel
l'au moins un fil de commande (12) est connecté au bus de communication essentiellement au même endroit où le panneau de commande (6) est connecté au bus de communication.

2. Système selon la revendication 1, dans lequel le micro-ordinateur est conçu pour transmettre et recevoir des communications selon un protocole de communications de dispositif et le module (10) communique avec le micro-ordinateur en utilisant le protocole de communications de dispositif.

3. Système selon la revendication 2, dans lequel le microprocesseur (16) comprend en outre un dispositif de stockage de logiciels, et les instructions lisibles par ordinateur permettant au module (10) de communiquer avec le dispositif (2) en utilisant le protocole de communications de dispositif sont stockées électroniquement sur le dispositif de stockage de logiciels.

4. Système selon la revendication 2, dans lequel le dispositif distant (30) est conçu pour transmettre et recevoir des communications en utilisant un protocole de communications de dispositif distant qui est différent du protocole de communications de dispositif, et le microprocesseur (16) traduit l'information entre le protocole de communication de dispositif distant et le protocole de communications de protocole de dispositif.

5. Système selon la revendication 1, dans lequel un ensemble de fiches (9) est fixé à une extrémité du câble d'alimentation (4), et le module (10) est incorporé avec l'ensemble de fiches (9).

6. Système selon la revendication 1, dans lequel un ensemble de fiches (9) est fixé à une extrémité du câble d'alimentation (4), et le module (10) est connecté opérationnellement à un segment du câble d'alimentation (4) situé entre l'ensemble de fiches (9) et le dispositif (2).

7. Système selon la revendication 6, dans lequel le module (10) est enfermé dans un boitier ou un manchon (111).

8. Système selon la revendication 1, dans lequel le câble d'alimentation (4) définit une première extrémité qui est au voisinage du dispositif (2) et une seconde extrémité qui est distale par rapport au dispositif (2), et le module (10) est situé au niveau ou près de l'extrémité distale du câble d'alimentation (4).

9. Système selon la revendication 1, dans lequel l'émetteur-récepteur (14) communique avec le dispositif distant (30) en utilisant au moins un protocole parmi les protocoles de communication R-F, infrarouge, Bluetooth, Bluetooth faible énergie ou wifi.

10. Procédé comprenant
la transmission sans fil d'information entre un dispositif distant (30) et un module (10) situé sur un câble d'alimentation (4) d'un dispositif (2) fixé de manière opérationnelle, le module (10) ayant un émetteur-récepteur (14), un microprocesseur (16) et un convertisseur d'énergie, le dispositif (2) ayant un micro-ordinateur séparé du microprocesseur (16) et conçu pour commander le dispositif (2), le dispositif (2) ayant en outre un panneau de commande (6) et un bus de communication assurant la modulation entre le panneau de commande (6) et le micro-ordinateur ; et
la transmission de l'information pour la commande du dispositif ((2) par le biais d'une communication filaire le long d'au moins un fil de commande (12) du câble d'alimentation (4), l'au moins un fil de commande (12) étant incorporé dans le câble d'alimentation (4) s'étendant du module (10) jusqu'au dispositif (2), l'au moins un fil de commande (12) étant connecté au bus de communication essentiellement au même endroit où le panneau de commande (6) est connecté au bus de communication.

11. Procédé selon la revendication 10, dans lequel l'information est un signal de commande conçu pour commander le fonctionnement du dispositif (2).

12. Procédé selon la revendication 10, comprenant en outre, après l'étape de transmission sans fil et avant l'étape de transmission, la traduction de l'information à partir d'un protocole de communications utilisé par le dispositif distant (30) en un protocole de communications utilisé par le dispositif (2).

13. Procédé selon la revendication 10, comprenant en outre la réception de l'information ou le retour d'information à partir d'un appareil, l'étape de réception comprenant au moins l'une des actions parmi :
(i) la réception de l'information ou du retour d'information du dispositif (2) vers le module (10) par le biais d'une communication filaire le long de l'au moins un fil de commande (12), et
(ii) la réception de l'information ou du retour d'information du module (10) vers le dispositif distant (30) par le biais d'une communication sans fil.
